# EUROPEAN PATENT SPECIFICATION

(11) **EP 4 465 418 B1**
(45) Date of publication and mention of the grant of the patent: **11.03.2026**
(21) Application number: 23900972.3
(22) Date of filing: 27.11.2023
(51) Int. Cl.: H01M 10/653, H01M 10/647, H01M 10/659, H01M 10/6556, H01M 10/613, H01M 50/209, H01M 50/262, H01M 50/258, H01M 50/682

(54) **BATTERY PACK PROVIDED WITH HEAT DISSIPATION PASSIVE COOLING STRUCTURE**
BATTERIEPACK MIT PASSIVER WÄRMEABLEITUNGSKÜHLSTRUKTUR
BLOC-BATTERIE COMPORTANT UNE STRUCTURE DE REFROIDISSEMENT PASSIF À DISSIPATION DE CHALEUR

(30) Priority: 06.12.2022 KR 20220168740
(43) Date of publication of application: 20.11.2024
(73) Proprietor: LG Energy Solution, Ltd., Seoul 07335 (KR)
(72) Inventor: YOON, Doo Han, Daejeon 34122 (KR); LEE, Jin Kyu, Daejeon 34122 (KR); SON, Chang Keun, Daejeon 34122 (KR)
(74) Representative: Plasseraud IP
(86) International application number: PCT/KR2023/019190
(87) International publication number: WO 2024/122953

(56) References cited:
- WO-A1-2012/038008
- CN-U- 210 467 931
- CN-U- 213 782 119
- CN-U- 213 782 119
- CN-U- 216 958 298
- JP-A- 2000 164 186
- KR-A- 20210 133 543
- KR-B1- 101 805 652
- US-A1- 2020 235 445
- US-A1- 2020 411 816

## Description

### [Technical Field]

The present invention relates to a battery pack equipped with a heat dispersion passive cooling structure, in which all prismatic cells in a battery block mounted in a battery pack are thermally connected to other adjacent battery blocks as well as to the entire pack case to maximize the heat capacity around the prismatic cells to quickly disperse the heat generated by the prismatic cells.

This application claims the benefit of priority to Korean Patent Application No. 10-2022-0168740, filed on December 6, 2022.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type cells, cylindrical cells, prismatic cells, and pouch-type cells based on the shape of the battery case. In a secondary battery, an electrode assembly mounted inside the battery case is a chargeable/dischargeable power generator consisting of a laminated structure of electrodes and separators.

Secondary batteries take the form of a battery pack, which can be a grouping of a plurality of battery cells. Battery packs increase energy density and can be used in devices that require high energy, such as electric vehicles. A battery pack electrically connects multiple battery cells to output a specified power, cools the battery cells as their temperature rises during operation, and has various safety devices to respond to emergencies such as ignition.

Particularly, since secondary batteries are required to be used continuously for a long period of time, it is necessary to effectively control the heat generated during the charging and discharging process. If the secondary battery is not properly cooled, the increase in temperature causes an increase in current, which causes an increase in temperature, and the increase in current causes the temperature to rise again, triggering a feedback chain reaction that eventually leads to the catastrophic condition of thermal runaway.

Moreover, when secondary batteries are grouped together in the form of modules or packs, the thermal runaway of one secondary battery can cause the thermal propagation phenomenon that continuously overheats other neighboring secondary batteries. Furthermore, there is a high risk of fire due to ignition sources such as flammable gases and heated electrodes emitted from overheated secondary batteries, so it is necessary to suppress the risk of ignition.

In this regard, as more battery cells are packed into the same pack space to increase energy density per unit volume, structures that can more efficiently disperse the heat generated by the battery cells during the charging and discharging process are required.

An example of a battery module assembly can be found in CN 210467931 U. An example of a rectangular rack system for accommodating at least one battery cell can be found in WO 2012/038008 A1. An example of a box body structure of CTP battery pack can be found in CN 213782119 U. An example of a battery device can be found in US 2020/235445 A1. An example of a connecting assembly and a battery module can be found in CN 216958298 U.

### [Description of the Invention]

### [Technical Problem]

The objective of the present invention is to provide a battery pack in which the individual prismatic cells comprising the battery pack are thermally connected to the battery block, the battery module, and the pack case to secure sufficient thermal capacity so that the heat generated by the prismatic cells can be quickly dispersed and the temperature rise can be effectively suppressed.

However, the technical problem the present invention aims to solve is not limited to the problems mentioned above, and other problems not mentioned will be apparent to those of ordinary skill in the art from the description of the invention set forth below.

### [Technical Solution]

The present invention relates to a battery pack according to claim 1.

The end plate may include an end bracket fixed to a mounting part provided in the pack case.

In addition, the side bracket may include an end bracket fixed to a mounting part provided in the pack case.

Here, the end bracket, the mounting part, and the pack case may be all thermally connected to each other by being made of a thermally conductive material.

In an exemplary embodiment of the present invention, the end bracket may be provided with a fastening surface aligned with the width direction, the fastening surface having at least one fastening hole formed therein, and being fixed to the mounting part through the fastening hole.

In addition, the end bracket may be provided with a reinforcing rib perpendicular to the fastening surface.

Additionally, the side plate may include at least one heat-absorbing/venting pouch inserted into an interior space compartmentalized by the bonding ribs, wherein the heat-absorbing/venting pouch seals and stores a liquid-impregnated absorbent material.

In an exemplary embodiment, the absorbent material may be a superabsorbent matrix including superabsorbent polymer (SAP) or superabsorbent fiber (SAF).

In addition, the heat-absorbing/venting pouch may be provided with a heat-fused sealing part along its edge, wherein a vulnerable part having a relatively low bursting strength may be provided on the heat-fused sealing part.

Meanwhile, the upper end of the side plate may be provided with an upper flange bent to contact an upper surface of the cell array, wherein the upper flange exerts a downward fixing force to press the cell array against the base plate of the pack case, as the end bracket is fixed to the mounting part.

In addition, the pack case may include: a base plate forming a bottom surface, a side frame forming walls along all sides of the base plate, and an upper cover sealing the upper surface of the pack case, wherein the inside of the base plate may be provided with a cooling flow path through which a cooling medium flows.

Additionally, a thermally conductive thermal interface material (TIM) may be interposed between the base plate and the contact surface of the battery block.

In addition, the side bracket may be provided with a fastening groove inserted into a weld bolt protruding from the end plate, wherein the weld bolt and fastening groove may be bonded to each other by welding.

Preferably, the side bracket may be provided with the fastening grooves on both left and right sides, respectively, relative to a center in the width direction of the side plate.

Accordingly, another cell array arranged along the width direction may share the side plate, and a weld bolt provided on a pair of end plates disposed on the front and rear surfaces of the another cell array may be fixed to the fastening grooves of the side bracket, allowing a plurality of cell arrays to extend along the width direction.

### [Advantageous Effects]

The battery pack of the present invention has the above configuration, wherein a plate comprising a single battery block by constraining a plurality of prismatic cells, a bracket for mounting the battery block to a pack case, and a structure of the pack case are thermally connected to each other by being made of a thermally conductive material.

As a result, the battery pack of the present invention forms a single heat capacity not only for the battery block that constrains the prismatic cell itself, but also for other battery blocks around it, and even the pack case, and by securing such a large heat capacity, it effectively suppresses the temperature rise during charging and discharging, and implements a passive cooling structure that quickly disperses heat even in emergency situations such as thermal runaway or thermal propagation.

However, the technical effects obtainable through the present invention are not limited to the effects described above, and other effects not mentioned here will be clearly understood by those skilled in the art from the description of the invention provided below.

### [Brief Description of the Drawings]

The following diagrams accompanying this specification illustrate preferred embodiments of the present invention and, together with the detailed description of the present invention that follows, serve to further illustrate the technical ideas of the present invention, and the present invention is not to be construed as limited to what is shown in such diagrams.
FIG. 1 is a diagram illustrating a battery block according to an exemplary embodiment of the present invention.
FIG. 2 is an exploded perspective view of the battery block of FIG. 1.
FIG. 3 is a diagram illustrating a side plate.
FIG. 4 is a cross-sectional view of the incision along line "A-A" in FIG. 3.
FIG. 5 is a cross-sectional view of the incision along line "B-B" in FIG. 3.
FIG. 6 and FIG. 7 are diagrams illustrating the structure in which a battery block expands in the width direction.
FIG. 8 and FIG. 9 are diagrams exemplarily illustrating the structure in which the battery block of the present invention is fixed to the pack case.
FIG. 10 is a plan view of the battery block showing the structure in which the battery block and pack case are thermally connected.
FIG. 11 is a diagram illustrating the heat transfer structure between the battery block and the base plate.

### [Best Mode for Invention]

The present invention is subject to various modifications and can have many embodiments, certain of which are described in detail below.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention relates to a battery pack, which in one example includes a plurality of battery blocks and a pack case to mount them.

A battery block includes a cell array including a plurality of prismatic cells arranged in a row, a pair of side plates disposed on each of both sides of the cell array, and a pair of end plates disposed on each of a front and rear surfaces of the cell array, wherein both ends of the end plates in the width direction are fixed to side brackets provided at both ends of the side plates in the longitudinal direction of the side plates, so that the cell array is constrained as a single block.

Here, the side plate, the end plate, and the side bracket are all thermally connected to each other by being made of a thermally conductive material, and wherein the end bracket provided on the end plate and/or side plate and the mounting part of the pack case to which the end bracket is fixed, and the pack case are all thermally connected to each other by being made of a thermally conductive material.

In the battery pack of the present invention, the prismatic cells and the cell arrays they form are thermally connected to the battery block to which they are constrained, to other battery blocks around them, and to the pack case, so that all structures around any one prismatic cell constitute a single thermal mass, and this large thermal mass enables a passive cooling structure that effectively suppresses the temperature rise during charging and discharging and quickly disperses heat even in emergency situations such as thermal runaway or thermal propagation.

### [Mode for Invention]

Specific embodiments of the present invention will now be described in detail with reference to the accompanying drawings. As used in the following description, relative positioning designations such as front to back, up and down, left and right are intended to aid in understanding the invention and refer to the orientation shown in the drawings unless otherwise defined.

### [First embodiment]

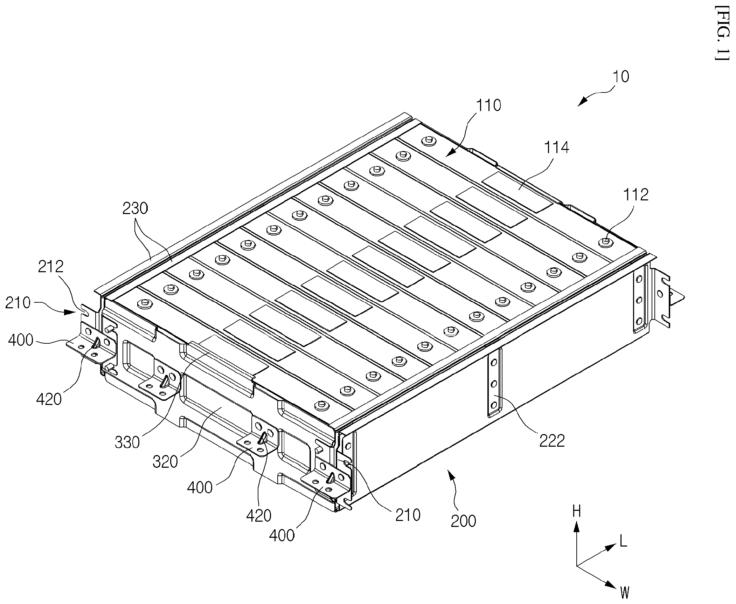

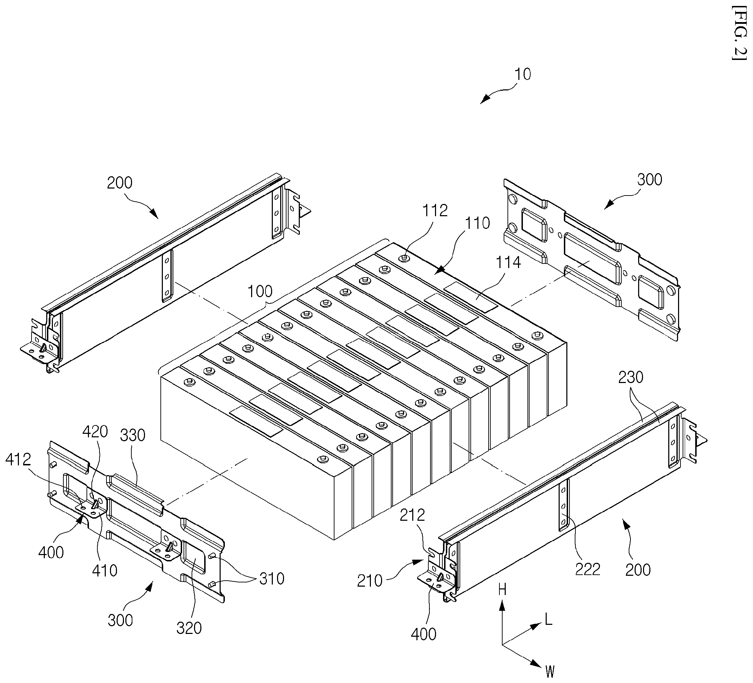

FIG. 1 is a diagram illustrating a battery block 10 according to an exemplary embodiment of the present invention, and FIG. 2 is an exploded perspective view of the battery block 10 of FIG. 1. The following will first describe the configuration of the battery block 10 as it is mounted in the battery pack 600 of the present invention. The description of the configuration of the battery block 10 is useful in understanding the overall configuration of the present invention, including its mounting structure to the pack case 602.

Referring to the attached FIGS. 1 and 2, a battery block 10 according to the present invention includes a pair of side plates 200 and a pair of end plates 300 that are coupled thereto to form a parallelepiped-shaped space, and a cell array 100 housed in the parallelepiped space.

The cell array 100 refers to a population of cells comprising a plurality of prismatic cells 110 arranged in a row. Each prismatic cell 110 is a finished prismatic secondary battery capable of being independently charged and discharged, and in the embodiment shown, 12 prismatic cells 110 are shown together to form a single cell array 100. All of the prismatic cells 110 are typically constructed to the same specifications, and the prismatic cells 110 aligned in a row collectively form a parallelepiped shape.

For reference, the illustrated prismatic cell 110 corresponds to a unidirectional prismatic cell 110 having both positive and negative electrode terminals 112 disposed on its upper surface, and also having a venting device 114 between the pair of electrode terminals 112. The venting device 114 is a safety valve that ruptures to relieve pressure inside the prismatic cell 110 when an exceed level of pressure is applied, and may include, for example, a notched rupture disk made of a thin plate-like member of a metal material. When the pressure inside the enclosed prismatic cell 110 rises, the pressure causes tensile strain across the thin plate and tears the weaker notch part to release the pressure inside the prismatic cell 110.

Further, the electrode terminals 112 of the prismatic cells 110 on the cell array 100 may be arranged to have the same polarity back-to-back in a row or alternating opposite polarities to facilitate electrical connections in parallel or series. In other words, alignment of the plurality of prismatic cells 110 in a row does not necessarily imply alignment of the polarity of the electrode terminals 112 in a row.

A pair of side plates 200 are disposed on each of both sides of the cell array 100, and a pair of end plates 300 are disposed on each of the front and rear surfaces of the cell array 100. Both ends of the end plate 300 in the width direction W are fixed to side bracket 210 provided at both ends in the longitudinal direction L of the side plate 200, and the interconnection of the end plate 300 and the side plate 200 via the side bracket 210 constrains the cell array 100 as a single block.

Here, the side plate 200 and the end plate 300, and the side bracket 210 connecting them, are all made of a thermally conductive material, such as a metallic material with good thermal conductivity, such as aluminum or stainless steel (SUS), through which the side plate 200 and the end plate 300 are thermally connected. In other words, for any prismatic cell 110 on the cell array 100, the side plate 200 and the end plate 300 in contact with the cell array 100, as well as other neighboring prismatic cells 110, form a single thermal mass that is thermally connected to each other.

As such, the entire battery block 10 forms a single thermal capacity, which provides the basis for a passive cooling structure that not only mitigates the rapid temperature rise of the prismatic cells 110 during charging and discharging, but also quickly disperses heat in the event of an emergency such as thermal runaway, thermal propagation, and the like.

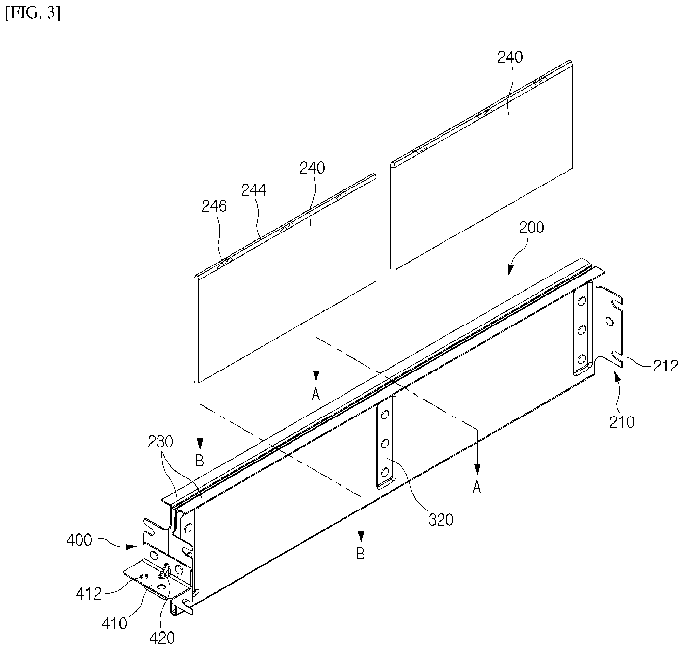

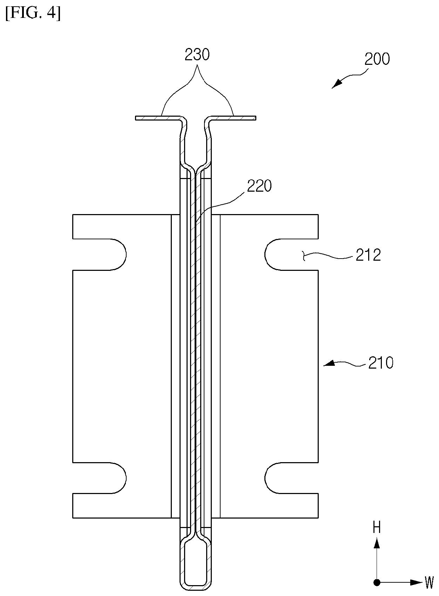

FIG. 3 is a diagram illustrating side plate 200, and FIG. 4 is a cross-sectional view through an incision along line "A-A" in FIG. 3. The illustrated side plate 200 includes a single plate bent into a "U" shape with an open upper end to form a space within. By bending a single plate into a "U" shape with an open upper end, the side plate 200 is lightweight and exhibits good mechanical strength.

Furthermore, as shown in FIGS. 3 and 4, the side plate 200 has a concave surface 222 on either side of the bent plate, and the facing concave surfaces 222 are bonded to each other to form bonding ribs 220. These bonding ribs 220 are provided at least one along the longitudinal direction L of the side plate 200, and in the embodiment shown, a total of three bonding ribs 220 are formed at each end and in the center of the side plate 200.

A single plate bent in a "U" shape may have excellent durability and strength against compression and tension in the longitudinal direction L due to the bending structure, but may be relatively weak against forces in the height direction H. The bonding ribs 220 improve the rigidity of the side plate 200 against the force in the height direction H by connecting the concave surface 222 on both sides of the side plate 200 together by bonding through welding, riveting, or the like.

By such a structure of the side plate 200, namely, a single plate structure bent to a "U" shape and a structure of concave surfaces 222 bonded to each other, the side plate 200 is lightweight and has strong mechanical rigidity. Accordingly, in the battery block 10 of the present invention, the side plate 200 replaces the configuration of the cross beam conventionally provided in the battery pack, and the simplified structure of the battery pack 600 improves the space utilization rate of the battery pack 600, further increasing the energy density in the same volume, and reducing the cost.

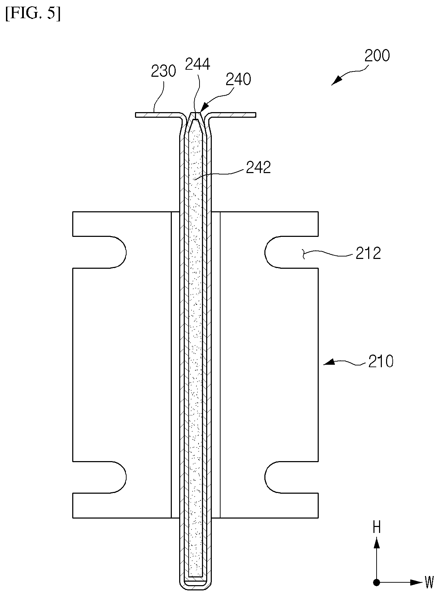

Furthermore, as shown in FIGS. 3 and 5, one or more heat-absorbing/venting pouches 240 are inserted and embedded within the side plate 200. That is, a narrow, elongated space is provided within the side plate 200 by a pair of concave surfaces 222 that locally form the bonding ribs 220, into which the heat-absorbing/venting pouches 240 are inserted. In the embodiment shown, a total of three bonding ribs 220 are formed at each end and in the center of the side plate 200 to create two compartmentalized spaces, each of which contains a single heat-absorbing/venting pouch 240.

The heat-absorbing/venting pouch 240 seals and stores an absorbent material 242 impregnated with a large amount of liquid, and the liquid impregnated with the absorbent material 242 absorbs the heat of the prismatic cell 110 transferred through the side plate 200. In other words, the heat-absorbing/venting pouch 240 has a heat capacity corresponding to the absorbed heat of the liquid impregnated with the absorbent material 242 and the latent heat that the liquid absorbs as it vaporizes when it exceeds its boiling point. The absorbed heat and latent heat of the liquid adds significant heat capacity to the side plate 200, allowing it to absorb more heat from the prismatic cell 110, further delaying the temperature rise of the prismatic cell 110.

The body of the heat-absorbing/venting pouch 240 may be manufactured using a flexible laminate sheet, which may be a three-or-more layer structure including an aluminum thin film layer, an inner resin layer formed on the inner side of the aluminum thin film layer, and an outer resin layer formed on the outer side of the aluminum thin film layer. For example, the inner resin layer may be unstretched casted polypropylene (CPP) or polypropylene (PP), and the outer resin layer may be polyethylene terephthalate (PET) or nylon.

And, when the liquid impregnated in a large amount in the absorbent material 242 contained in the heat-absorbing/venting pouch 240 absorbs the heat generated by the prismatic cell 110 and its temperature exceeds the boiling point and vaporizes, the rapid increase in volume due to the phase change from liquid to gas causes the heat-absorbing/venting pouch 240, which seals the absorbent material 242, to be under pressure. If the internal pressure exceeds the bursting strength of the heat-absorbing/venting pouch 240, a portion of the heat-absorbing/venting pouch 240 tears, releasing vapor. This venting of the vapor allows the high-temperature prismatic cell 110 to cool once again.

Here, the heat-absorbing/venting pouch 240 may be configured such that the vapor that is discharged is appropriately directed so that it performs an effective cooling action. To accomplish this, a portion of the heat-fused sealing part 244 formed along the edge of the heat-absorbing/venting pouch 240 may be provided with a vulnerable part 246. The vulnerable part 246 is configured to preferentially fracture under increased pressure due to vaporization of the liquid by locally reducing the seal strength of the heat-fused sealing part 244. That is, the vulnerable part 246 may be formed in a manner that makes the heat fusion strength of the heat-fused sealing part 244 lower than the surrounding area. For example, the vulnerable part 246 can be made relatively thinner in thickness than the surrounding area or notched to reduce its strength, or it can be formed by locally removing the aluminum thin film layer that maintains the durability of the laminate sheet.

Meanwhile, in a first embodiment of the present invention, the absorbent material 242 may be an absorbent material 242 including a superabsorbent matrix, such as a superabsorbent polymer (SAP) or a superabsorbent fiber (SAF). Superabsorbent matrices can be porous or fibrous, capable of absorbing large amounts of liquid by exhibiting capillary action, while superabsorbent fibers can be manufactured in the form of fibers, such as nonwoven fabrics, by processing superabsorbent resins. The superabsorbent matrix can significantly increase the heat capacity of the side plate 200 as it can hold a large amount of liquid.

The specific types of superabsorbent resins and superabsorbent fibers made therefrom are not particularly limited in the present invention, but can be used without limitation as long as they have a high absorption capacity for fluids, in particular water. Examples of superabsorbent resins in the present invention include one or more selected from the group consisting of polyacrylic acid, polyacrylate, polyacrylate graft polymers, starch, cross-linked carboxymethylated cellulose, acrylic acid copolymers, hydrolyzed starch-acrylonitrile graft copolymers, starch-acrylic acid graft copolymers, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinyl phosphoric acid, polyvinyl sulfonic acid, sulfonated polystyrene, polyvinylamine, polydialkylaminoalkyl (meth)acrylamide, polyethyleneimine, polyarylamine, polyarylguanidine, polydimethyldialylammonium hydroxide, quaternized polystyrene derivatives, guanidine-modified polystyrene, quaternized poly(meth)acrylamide, polyvinylguanidine and mixtures thereof, preferably crosslinked polyacrylic acid salts, crosslinked polyacrylic acid, and crosslinked acrylic acid copolymers, but it is not limited thereto.

The type of acrylic acid copolymer used as a superabsorbent resin in the present invention is not particularly limited, but may preferably be a copolymer including one or more comonomers selected from the group consisting of acrylic acid monomer and maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

In the present invention, the superabsorbent resin may have an absorption capacity for water of 10 g/g to 500 g/g, preferably 50 g/g to 200 g/g, but is not limited thereto. That is, each gram of the superabsorbent resin may absorb 10 g to 500 g of water, preferably 50 g to 200 g of water.

In the present invention, the greater the amount of water absorption of the superabsorbent resin, the better the duration of the cooling effect, but when the amount exceeds 500 g/g, the fluidity of the superabsorbent resin increases and it is difficult to maintain its shape, so that effective cooling cannot be exerted, and when the amount is less than 10 g/g, the duration of the cooling effect is too short to be effective.

And, in a first embodiment of the present invention, the liquid impregnated in the absorbent material 242 may be water. Water has the largest specific heat and latent heat of any readily available liquid. Therefore, water impregnated in the absorbent material 242 is suitable for application in the heat-absorbing/venting pouch 240 of the present invention because it absorbs a large amount of heat during its phase change to a gas, beginning even before it is vaporized.

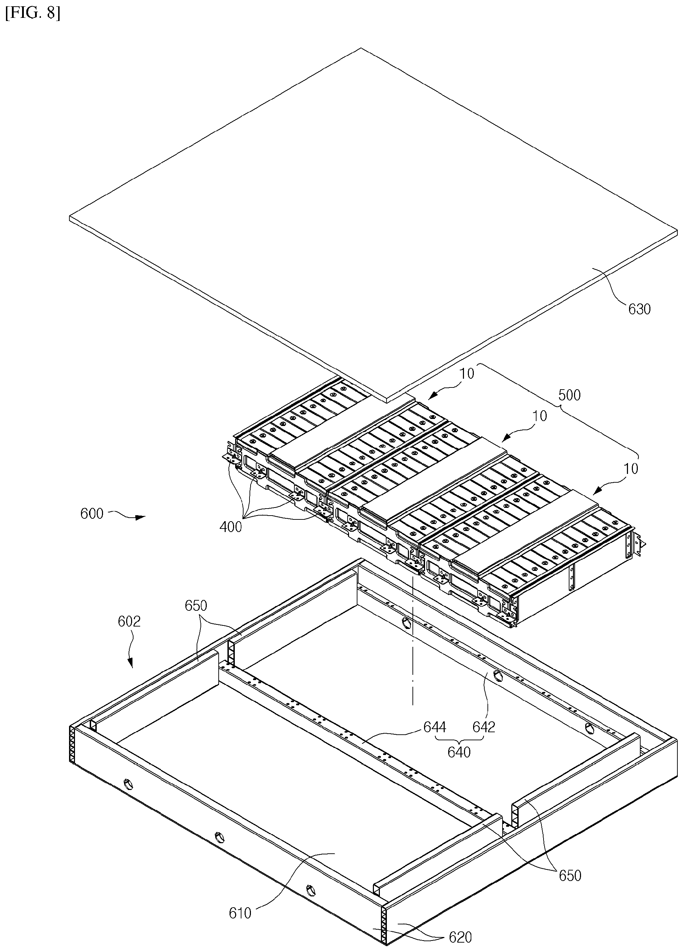

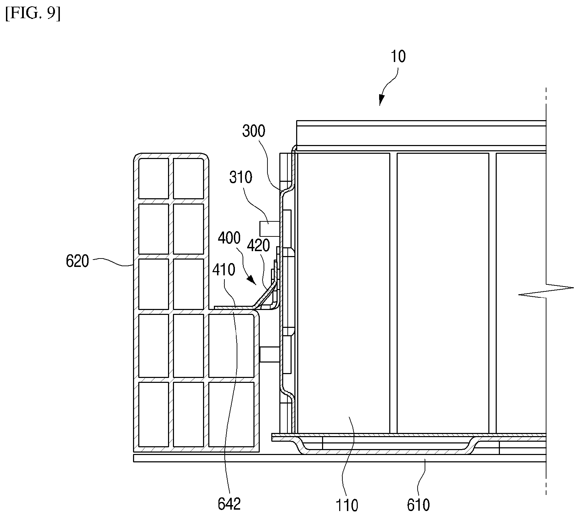

Meanwhile, at the upper end of the side plate 200, there is a bent upper flange 230 that contacts the upper surface of the cell array 100. The upper flange 230 creates a downward fixing force that presses the cell array 100 to the bottom when the battery block 10 is mounted in the pack case 602. The structure by which the battery block 10 of the present invention is mounted to the pack case 602 will be described in more detail later with reference to FIGS. 8 and 9.

Referring to FIGS. 1 and 2, the side bracket 210 provided at both ends of the side plates 200 include fastening grooves 212 that are inserted into weld bolts 310 protruding from the end plates 300, wherein the weld bolts 310 and the fastening grooves 212 are bonded to each other by welding.

A weld bolt 310 provided on a pair of end plates 300 disposed on the front and rear surfaces of the cell array 100, respectively, provide a fastening point for the side brackets 210, and fastening grooves 212 are engaged in the weld bolts 310 to primarily align assembly position of the side plates 200 and end plates 300. For a stable and robust coupling of the side plate 200 and the end plate 300, and for strong constraint to the cell array 100, the weld bolts 310 and the fastening grooves 212 may be provided in an up-down pair relative to the center in the height direction H of the cell array 100.

Then, referring to FIGS. 1 through 3, the end plate 300 includes an end bracket 400 that is fixed to the pack case 602. Additionally, the side bracket 210 also includes an end bracket 400 that is fixed to the pack case 602.

The end bracket 400 provided on the end plate 300 and the side plate 200 has a fastening surface 410 aligned with the width direction W. The fastening surface 410 of the end bracket 400 has one or more fastening holes 412 formed. The fastening surface 410 of the end bracket 400 is seated to a mounting part 640 provided in the pack case 602 (see FIG. 9), and the battery block 10 is fixed to the pack case 602 by binding or uniting the end bracket 400 to the mounting part 640 of the pack case 602 via the fastening holes 412.

Further, the end bracket 400 may include reinforcing ribs 420, such as in the form of a right triangle perpendicular to the fastening surface 410, to reinforce rigidity against load in the height direction. For reference, to reinforce the rigidity of the end plate 300 itself, one or more concave surfaces 320, similar to the concave surfaces 222 of the side plate 200, may be bent and formed, and the upper end of the end plate 300 may also be provided with an upper flange 330 for stable fixation of the cell array 100.

### [Second embodiment]

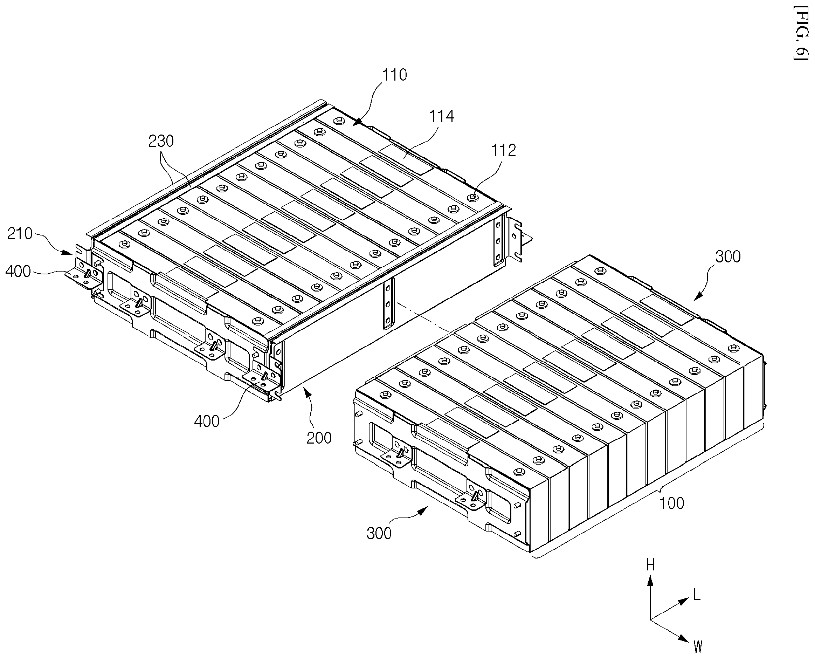

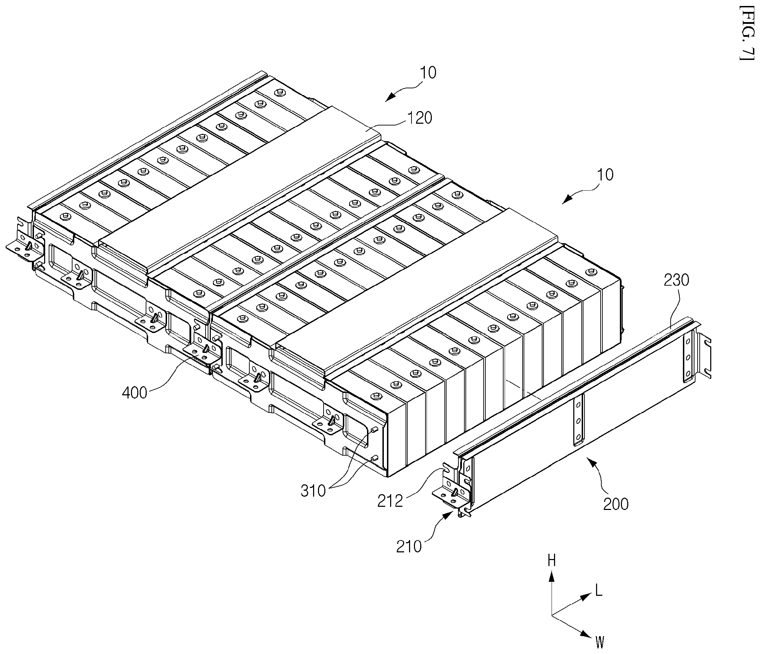

FIGS. 6 and 7 are diagrams illustrating a structure in which the battery block 10 of FIG. 1 extends in the width direction W.

The battery block 10 of the present invention is expandable to any number of cell arrays 100 along the width direction W via the side plates 200 and side brackets 210. A second embodiment of the present invention describes one such expansion of the battery block 10.

Referring to FIG. 6, the side bracket 210 is provided with a fastening groove 212 on both the left and right sides, respectively, relative to the center in the width direction W of the side plate 200. Thus, for one side plate 200, it is possible to attach one end plate 300 to both sides in the width direction W of the side plate 200.

As shown in FIG. 7, another cell array 100 arranged along the width direction W share a single side plate 200 in the center, and a weld bolt 310 provided in a pair of end plates 300 disposed at the front and rear surfaces of another array of cells 100, respectively, is fixed to the fastening grooves 212 of the side brackets 210 to allow a plurality of cell arrays 100 to extend along the width direction W.

In this way, as the side bracket 210 is provided with fastening grooves 212 on both the left and right sides, respectively, it becomes possible to couple one end plate 300 with each side of one side plate 200, and as neighboring cell arrays 100 share one side plate 200, the total number of side plates 200 is only one more than the number of cell arrays 100 in a structure in which a plurality of battery blocks 10 are connected. Thus, the space efficiency of the battery pack 600 mounting the battery block 10 of the present invention is further improved.

In addition, a venting device 114 provided on the upper surface of the prismatic cell 110 arranged in the cell array 100 is also arranged in a row, and a venting duct 120 covering the upper part of the entire venting device 114 is provided to guide the discharge of hot gases, flames, and various superheated particles ejected from the overheated prismatic cell 110 in a safe direction.

### [Third embodiment]

In a third embodiment of the present invention, a structure is described in which the battery block 10 extending in the width direction W described above is mounted to the pack case 602. FIGS. 8 and 9 are diagrams illustrating a structure in which the battery block 10 is fixed to the pack case 602.

The pack case 602 in which the plurality of battery blocks 10 are mounted includes a base plate 610 forming a bottom surface, a side frame 620 forming walls along all sides of the base plate 610, and an upper cover 630 sealing the upper surface of the pack case 602. The pack case 602 shown illustrates an example of two battery modules 500 with side plates 200 and end plates 300 coupled together in a grid configuration to form a row of three cell arrays 100 (an assembly of a plurality of battery blocks connected together via side plates in accordance with a second embodiment will be referred to herein as a battery module). For reference, one battery module 500 is not shown in FIG. 8 to clearly illustrate the structure of the pack case 602.

One battery module 500 with three cell arrays 100 forming a row has end brackets 400 exposed along the end plates 300 on the front and rear surfaces, and one end bracket 400 also exposed on the side brackets 210 between the end plates 300.

Referring to the cross-sectional view of FIG. 9, the pack case 602 is provided with a rail-shaped mounting part 640 corresponding to the fastening surfaces 410 of the end brackets 400 that protrude from the front and rear surfaces of the battery module 500. The mounting part 640 includes a pair of side mounting parts 642 coupled to or integrally formed with the side frame 620, and a center mounting part 644 arranged across the center of the base plate 610.

When the battery module 500 is inserted into the space between the side mounting part 642 and the center mounting part 644, the fastening surface 410 of the end bracket 400 faces the mounting part 640 of the pack case 602, and all of the battery blocks 10 are fixed to the pack case 602 collectively by binding or uniting the end bracket 400 to the mounting part 640 of the pack case 602 via the fastening holes 412.

Here, both the end bracket 400 provided on the battery block 10 and the mounting part 640 correspondingly provided on the pack case 602, and the pack case 602, which includes a base plate 610 and a side frame 620 as a basic skeleton, are all made of a thermally conductive material (e.g., aluminum, SUS, etc.). As described in the first embodiment, the side plate 200 and the end plate 300, and the side bracket 210 connecting them are all made of thermally conductive material and are thermally connected to each other. Further, the end bracket 400 provided on the end plate 300 and side plate 200 is also made of a thermally conductive material, and the structure of the pack case 602, including the mounting part 640, is also made of a thermally conductive material, so that the prismatic cell 110, the cell array 100, the battery block 10, the battery module 500, and the pack case 602 are all thermally connected.

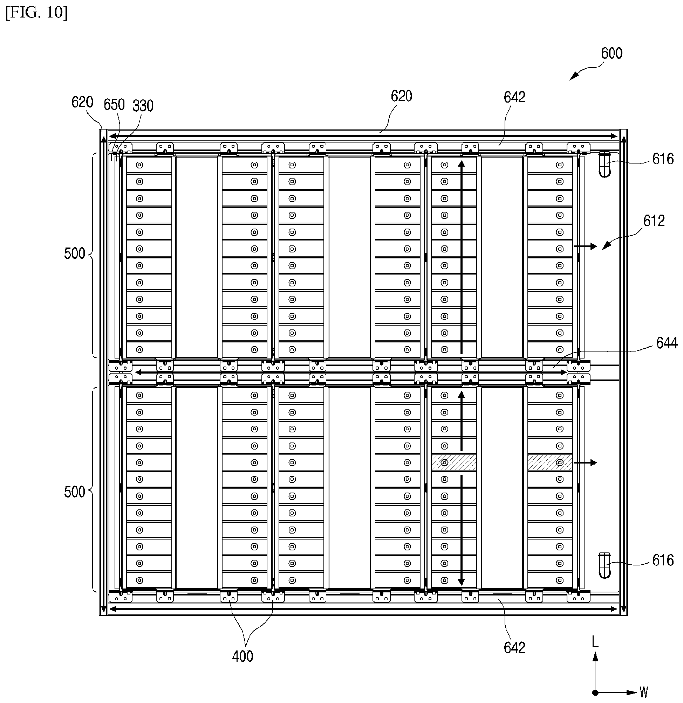

FIG. 10 is a diagram illustrating the thermally connected structure of the battery block 10 and pack case 602, wherein any one prismatic cell 110, shown in shading (hatching), can transfer heat in all directions as all surrounding structures form a single thermally connected heat capacity (arrows indicate approximate heat transfer paths). Any of the prismatic cells 110 can eventually transfer heat in all directions to the pack case 602, resulting in a passive cooling structure that effectively suppresses temperature rise during charging and discharging and quickly disperses heat in the event of an emergency such as thermal runaway or thermal propagation, and the like.

Meanwhile, when the end brackets 400 of each battery block 10 are coupled and fixed to the mounting part 640 of the pack case 602, the side plates 200, and furthermore the upper flanges 320, 230, which are bent and formed on the upper end of the end plates 300, naturally generate a downward fixing force that presses the cell array 100 against the base plate 610, thereby ensuring that the cell array 100 is firmly pressed against the base plate 610.

The adhesion between the cell array 100 and the base plate 610 plays an important role in facilitating the transfer of heat generated by the cell array 100 to the base plate 610. Therefore, it would be advantageous for the upper flange 230, 330 to generate sufficient downward fixing force if the tolerances are managed in such a way that there is a small amount of clearance between the fastening surface 410 of the end bracket 400 and the mounting part 640 when the battery block 10 or battery module 500 is placed in the pack case 602.

Referring to FIG. 8, it is a diagram illustrating a structure in which the upper flange 230 of the side plate 200 fixes the cell array 100. As described above, the upper flange 230 of the side plate 200 contacts the upper surface of an adjacent cell array 100 that shares the side plate 200, creating a downward fixing force that presses the cell array 100 against the base plate 610 when the battery block 10 is mounted to the pack case 602 via the end brackets 400. However, since the upper flange 230 at both ends in the width direction of the pack case 602 does not have a corresponding cell array 100, it may be desirable to form a flange mounting part 650 on the side frame 620 and allow the hollow upper flange 230 to be supported on the flange mounting part 650 to provide a stable mounting while also ensuring that a uniform pressing force is applied to the corners of the cell array 100.

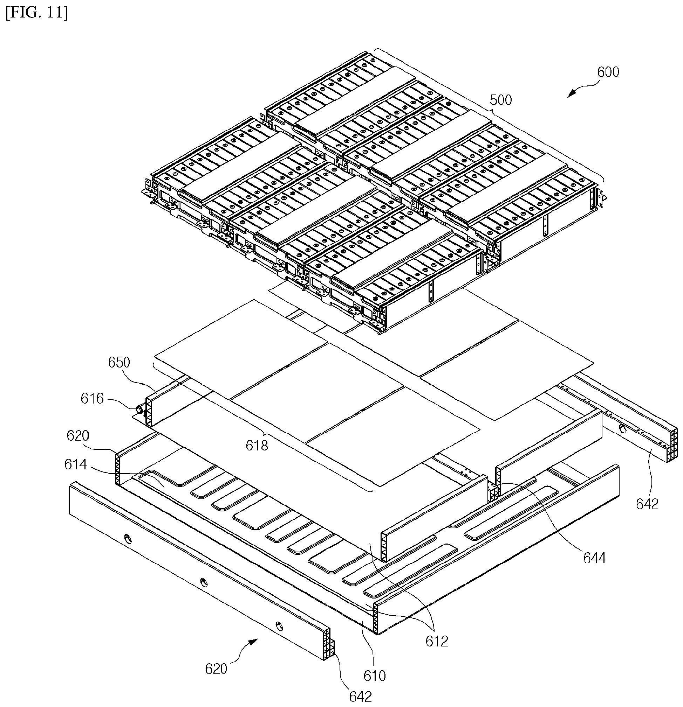

FIG. 11 is a diagram illustrating a heat transfer structure between the battery block 10 and the base plate 610. The battery pack 600 of the present invention has a very good adhesion of the battery block 10 to the base plate 610 due to the configuration of the end bracket 400 and the upper flange 230. Therefore, the battery pack 600 of the present invention does not require the use of adhesives for the fixation in the lower part of the battery block 10, and since no adhesives are used, the cooling in the lower part, that is, heat transfer, of the battery block 10 is facilitated. Furthermore, since no adhesive is used, the mounting process of the battery block 10 is simplified and damage is prevented when the battery block 10 is removed.

In the embodiment shown, the base plate 610 includes a heat sink 612 having a cooling flow path 614 through which a cooling medium flows therein. The heat sink 612 includes a lower plate with the cooling flow path 614 formed therein, and an upper plate that is fluidly seals by bonding to the lower plate, the upper plate having a pair of flow adapters 616 that form inlets and outlets for cooling medium to be distributed to the cooling fluid path 614 (only one flow adapter is shown in FIG. 11 due to illustrated orientation).

Further, between the heat sink 612 of the base plate 610 and the contact surface of the battery block 10, a thermally conductive thermal interface material (TIM) 618 may be interposed. The thermally conductive thermal interface material 618 refers to an air-permeable material that has a significantly higher thermal conductivity than metallic materials such as aluminum, and the thermally conductive thermal interface material 618 contributes to rapidly transferring heat generated by the battery block 10 to the heat sink 612 with a high thermal conductivity and by acting as a filler to smooth out microscopic irregularities in the contact surface. This function of the thermally conductive thermal interface material 618 is assured by the close adhesion between the base plate 610 and the battery block 10 by the end bracket 400 and the upper flange 230.

The present invention has been described in more detail above with reference to the drawings and embodiments. However, it is to be understood that the configurations shown in the drawings or embodiments described herein are only one embodiment of the invention and do not represent all of the technical ideas of the present invention, and that there may be various modifications that may replace them at the time of filing the present disclosure.

### [Reference numerals]

10: BATTERY BLOCK
100: CELL ARRAY
110: PRISMATIC CELL
112: ELECTRODE TERMINAL
114: VENTING DEVICE
120: VENTING DUCT
200: SIDE PLATE
210: SIDE BRACKET
212: FASTENING GROOVE
220: BONDING RIB
222: CONCAVE SURFACE
230: UPPER FLANGE
240: HEAT-ABSORBING/VENTING POUCH
242: ABSORBENT MATERIAL
244: HEAT-FUSED SEALING PART
246: VULNERABLE PART
300: END PLATE
310: WELD BOLT
320: CONCAVE SURFACE
330: UPPER FLANGE
400: END BRACKET
410: FASTENING SURFACE
412: FASTENING HOLE
420: REINFORCING RIB
500: BATTERY MODULE
600: BATTERY PACK
602: PACK CASE
610: BASE PLATE
612: HEAT SINK
614: COOLING FLOW PATH
616: FLOW ADAPTER
618: THERMALLY CONDUCTIVE THERMAL INTERFACE MATERIAL
620: SIDE FRAME
630: UPPER COVER
640: MOUNTING PART
642: SIDE MOUNTING PART
644: CENTER MOUNTING PART
650: FLANGE MOUNTING PART
W: WIDTH DIRECTION
L: LONGITUDINAL DIRECTION
H: HEIGHT DIRECTION

## Claims

1. A battery pack (600) comprising:
a plurality of battery blocks (10) each including a cell array (100) including a plurality of prismatic cells (110) arranged in a row, a pair of side plates (200) disposed on opposite sides of the cell array (100), and a pair of end plates (300) disposed on each of front and rear surfaces of the cell array (100), wherein opposite ends of the end plates (300) in a width direction (W) of the side plates (200) are fixed to side brackets (210) disposed at opposite ends of the side plates (200) in a longitudinal direction (L) of the side plates (200), so that each cell array (100) is constrained as a single block (10); and
a pack case (602) in which the plurality of battery blocks (10) is mounted, wherein
the side plate (200), the end plate (300), and the side bracket (210) of each battery block (10) are all thermally connected to each other and made of a thermally conductive material;
**characterized in that** each side plate (200) is a single plate bent in a "U" shape with an open upper end forming a space therein, provided in a height direction (H), wherein each side plate (200) has a concave surface (222) on first and second opposite sides of the single bent plate, the concave surfaces (222) facing each other, each concave surface (222) having at least one bonding rib (220), the bonding ribs (220) of each concave surface (222) being bonded to each other along a longitudinal direction (L) of the side plate (200).

2. The battery pack (600) of claim 1, wherein each end plate (300) includes an end bracket (400) fixed to a mounting part (640) of the pack case (602).

3. The battery pack (600) of claim 1, wherein each side bracket (210) includes an end bracket (400) fixed to a mounting part (640) of the pack case (602).

4. The battery pack (600) of claim 2 or 3, wherein each end bracket (400), the mounting part (640), and the pack case (602) are all thermally connected to each other and made of a thermally conductive material.

5. The battery pack (600) of claim 2 or 3, wherein each end bracket (400) has a fastening surface (410) extending in a width direction (W) thereof, the fastening surface (410) having at least one fastening hole (412) formed therein, each end bracket (400) being fixed to the mounting part (640) through the at least one fastening hole (412).

6. The battery pack (600) of claim 5, wherein each end bracket (400) has a reinforcing rib (420) extending perpendicular to the fastening surface (410).

7. The battery pack (600) of claim 1, wherein each side plate (200) includes at least one heat-absorbing/venting pouch (240) disposed in an interior space bounded by the bonding ribs (220), wherein the heat-absorbing/venting pouch (240) seals and stores a liquid-impregnated absorbent material (242) therein.

8. The battery pack (600) of claim 7, wherein the absorbent material (242) is a superabsorbent matrix including a superabsorbent polymer (SAP) or a superabsorbent fiber (SAF).

9. The battery pack (600) of claim 8, wherein the heat-absorbing/venting pouch (240) has a heat-fused sealing part (244) along an edge thereof, the heat-fused sealing part (244) having a vulnerable part (246) configured to preferentially fracture when an internal pressure of the absorbent material (242) exceeds a bursting strength of the heat-absorbing/venting pouch (240).

10. The battery pack (600) of claim 1, wherein an upper end of each side plate (200) has an upper flange (230) bent and contacting an upper surface of the cell array (100), the upper flange (230) exerting a downward fixing force to press the cell array (100) against a base plate (610) of the pack case (602).

11. The battery pack (600) of claim 10, wherein the pack case (602) comprises:
the base plate (610) forming a bottom surface, a side frame (620) forming walls along sides of the base plate (610), and an upper cover (630) sealing an upper surface of the pack case (602),
wherein an inside of the base plate (610) defines a cooling flow path (614) therein configured to receive a flow therethrough of a cooling medium.

12. The battery pack (600) of claim 11, wherein a thermally conductive thermal interface material (TIM) is interposed between the base plate (610) and a contact surface of each battery block (10) that faces the base plate (610).

13. The battery pack (600) of claim 1, wherein each side bracket (210) has a fastening groove (212) inserted into a weld bolt (310) protruding from the end plate (300) fixed thereto, wherein the weld bolt (310) and fastening groove (212) are bonded to each other by welding.

14. The battery pack (600) of claim 13, wherein the fastening groove (212) is a first fastening groove, each side bracket (210) having a second fastening groove (212), the first and second fastening grooves (212) being on left and right sides of the side bracket (210), respectively, relative to a center of the side bracket (210) in the width direction (W) of the side plates (200).

15. The battery pack (600) of claim 14, wherein each side plate (200) is attached to first and second adjacent ones of the cell arrays (100) arranged along the width direction (W) of the side plates (200), and the weld bolt (310) provided on the pair of end plates (300) disposed on the front and rear surfaces of the second one of the cell arrays (100) is fixed to the fastening grooves (212) of the side bracket (210) of the first one of the cell arrays (100).

## Patentansprüche

1. Batteriepack (600), umfassend:
eine Mehrzahl von Batterieblöcken (10), welche jeweils eine Zellanordnung (100) umfassen, welche eine Mehrzahl prismatischer Zellen (110), welche in einer Reihe angeordnet sind, ein Paar Seitenplatten (200), welche an entgegengesetzten Seiten der Zellanordnung (100) angeordnet sind, und ein Paar Endplatten (300) umfasst, welche an jeweils vorderen und hinteren Flächen der Zellanordnung (100) angeordnet sind, wobei entgegengesetzte Enden der Endplatten (300) in einer Breitenrichtung (W) der Seitenplatten (200) an Seitenhalterungen (210) fixiert sind, welche an entgegengesetzten Enden der Seitenplatten (200) in einer longitudinalen Richtung (L) der Seitenplatten (200) angeordnet sind, sodass jede Zellanordnung (100) als ein einzelner Block (10) beschränkt ist; und
ein Packgehäuse (602), in welchem die Mehrzahl von Batterieblöcken (10) montiert ist, wobei die Seitenplatte (200), die Endplatte (300) und die Seitenhalterung (210) jedes Batterieblocks (10) alle thermisch miteinander verbunden sind und aus einem thermisch leitenden Material hergestellt sind;
**dadurch gekennzeichnet, dass** jede Seitenplatte (200) eine einzelne Platte ist, welche in eine "U"-Form mit einem oberen offenen Ende und einem darin gebildeten Raum gebogen ist, welche in einer Höhenrichtung (H) bereitgestellt ist, wobei jede Seitenplatte (200) eine konkave Fläche (222) an einer ersten und einer zweiten entgegengesetzten Seite der einzelnen gebogenen Platte aufweist, wobei die konkaven Flächen (222) einander zugewandt sind, wobei jede konkave Fläche (222) wenigstens eine Verbindungsrippe (220) aufweist, wobei die Verbindungsrippen (220) jeder konkaven Fläche (222) entlang einer longitudinalen Richtung (L) der Seitenplatte (200) miteinander verbunden sind.

2. Batteriepack (600) nach Anspruch 1, wobei jede Endplatte (300) eine Endhalterung (400) umfasst, welche an einem Montageteil (640) des Packgehäuses (602) befestigt ist.

3. Batteriepack (600) nach Anspruch 1, wobei jede Seitenhalterung (210) eine Endhalterung (400) umfasst, welche an einem Montageteil (640) des Packgehäuses (602) fixiert ist.

4. Batteriepack (600) nach Anspruch 2 oder 3, wobei jede Endhalterung (400), das Montageteil (640) und das Packgehäuse (602) alle thermisch miteinander verbunden sind und aus einem thermisch leitenden Material hergestellt sind.

5. Batteriepack (600) nach Anspruch 2 oder 3, wobei jede Endhalterung (400) eine Befestigungsfläche (410) aufweist, welche sich in einer Breitenrichtung (W) davon erstreckt, wobei die Befestigungsfläche (410) wenigstens ein darin gebildetes Befestigungsloch (412) aufweist, wobei jede Endhalterung (400) durch das wenigstens eine Befestigungsloch (412) an dem Montageteil (640) fixiert ist.

6. Batteriepack (600) nach Anspruch 5, wobei jede Endhalterung (400) eine Verstärkungsrippe (420) aufweist, welche sich senkrecht zu der Befestigungsfläche (410) erstreckt.

7. Batteriepack (600) nach Anspruch 1, wobei jede Seitenplatte (200) wenigstens einen wärmeabsorbierenden/entlüftenden Beutel (240) umfasst, welcher in einem Innenraum angeordnet ist, welcher durch die Verbindungsrippen (220) begrenzt ist, wobei der wärmeabsorbierende/entlüftende Beutel (240) ein flüssigkeitsimprägniertes Absorptionsmaterial (242) darin abdichtet und speichert.

8. Batteriepack (600) nach Anspruch 7, wobei das Absorptionsmaterial (242) eine superabsorbierende Matrix ist, welche ein superabsorbierendes Polymer (SAP) oder eine superabsorbierende Faser (SAF) umfasst.

9. Batteriepack (600) nach Anspruch 8, wobei der wärmeabsorbierende/entlüftende Beutel (240) einen wärmeverschmolzenen Dichtungsteil (244) entlang einem Rand davon aufweist, wobei der wärmeverschmolzene Dichtungsteil (244) einen ungeschützten Teil (246) aufweist, welcher dazu eingerichtet ist, vorzugsweise zu brechen, wenn ein interner Druck des Absorptionsmaterials (242) eine Berstfestigkeit des wärmeabsorbierenden/entlüftenden Beutels (240) überschreitet.

10. Batteriepack (600) nach Anspruch 1, wobei ein oberes Ende jeder Seitenplatte (200) einen oberen Flansch (230) aufweist, welcher gebogen ist und eine obere Fläche der Zellanordnung (100) kontaktiert, wobei der obere Flansch (230) eine nach unten gerichtete Fixierkraft ausübt, um die Zellanordnung (100) gegen eine Grundplatte (610) des Packgehäuses (602) zu drücken.

11. Batteriepack (600) nach Anspruch 10, wobei das Packgehäuse (602) umfasst:
die Grundplatte (610), welche eine Bodenfläche bildet, einen Seitenrahmen (620), welcher Wände entlang von Seiten der Grundplatte (610) bildet, und eine obere Abdeckung (630), welche eine obere Fläche des Packgehäuses (602) abdichtet,
wobei eine Innenseite der Grundplatte (610) darin einen Kühlströmungspfad (614) definiert, welcher dazu eingerichtet ist, eine Strömung eines Kühlmittels dadurch zu empfangen.

12. Batteriepack (600) nach Anspruch 11, wobei ein thermisch leitendes thermisches Schnittstellenmaterial (TIM) zwischen der Grundplatte (610) und einer Kontaktfläche jedes Batterieblocks (10) eingefügt ist, welche der Grundplatte (610) zugewandt ist.

13. Batteriepack (600) nach Anspruch 1, wobei jede Seitenhalterung (210) eine Befestigungsnut (212) aufweist, welche in einen Schweißbolzen (310) eingesetzt ist, welcher von der Endplatte (300) hervorsteht und daran fixiert ist, wobei der Schweißbolzen (310) und die Befestigungsnut (212) durch Schweißen miteinander verbunden sind.

14. Batteriepack (600) nach Anspruch 13, wobei die Befestigungsnut (212) eine erste Befestigungsnut ist, wobei jede Seitenhalterung (210) eine zweite Befestigungsnut (212) aufweist, wobei die erste und die zweite Befestigungsnut (212) jeweils auf einer linken und einer rechten Seite der Seitenhalterung (210) relativ zu einem Zentrum der Seitenhalterung (210) in der Breitenrichtung (W) der Seitenplatten (200) sind.

15. Batteriepack (600) nach Anspruch 14, wobei jede Seitenplatte (200) an einer ersten und einer zweiten Benachbarten der Zellanordnungen (100) angebracht ist, welche entlang der Breitenrichtung (W) der Seitenplatten (200) angeordnet sind, und wobei der Schweißbolzen (310), welcher an dem Paar von Endplatten (300) bereitgestellt ist, welche an der vorderen und der hinteren Fläche der Zweiten der Zellanordnungen (100) angeordnet sind, an den Befestigungsnuten (212) der Seitenhalterung (210) der Ersten der Zellanordnungen (100) fixiert ist.

## Revendications

1. Bloc-batterie (600) comprenant :
une pluralité de blocs de batterie (10) comportant chacun un réseau de cellules (100) comportant une pluralité de cellules prismatiques (110) agencées en rangée, une paire de plaques latérales (200) disposées sur des côtés opposés du réseau de cellules (100), et une paire de plaques d'extrémité (300) disposées sur chacune des surfaces avant et arrière du réseau de cellules (100), dans lequel des extrémités opposées des plaques d'extrémité (300) dans une direction de largeur (W) des plaques latérales (200) sont fixées à des supports latéraux (210) disposés à des extrémités opposées des plaques latérales (200) dans une direction longitudinale (L) des plaques latérales (200), de sorte que chaque réseau de cellules (100) soit contraint comme un seul bloc (10) ; et
un boîtier de bloc-batterie (602) dans lequel est montée la pluralité de blocs de batterie (10), dans lequel
la plaque latérale (200), la plaque d'extrémité (300) et le support latéral (210) de chaque bloc de batterie (10) sont tous reliés thermiquement entre eux et constitués d'un matériau thermoconducteur ;
**caractérisé en ce que** chaque plaque latérale (200) est une plaque simple courbée en forme de « U » avec une extrémité supérieure ouverte formant un espace en son sein, prévue dans une direction de hauteur (H), dans lequel chaque plaque latérale (200) présente une surface concave (222) sur de premier et deuxième côtés opposés de la plaque simple courbée, les surfaces concaves (222) se faisant face, chaque surface concave (222) présentant au moins une nervure de liaison (220), les nervures de liaison (220) de chaque surface concave (222) étant liées entre elles selon une direction longitudinale (L) de la plaque latérale (200).

2. Bloc-batterie (600) selon la revendication 1, dans lequel chaque plaque d'extrémité (300) comporte un support d'extrémité (400) fixé à une partie de montage (640) du boîtier de bloc-batterie (602).

3. Bloc-batterie (600) selon la revendication 1, dans lequel chaque support latéral (210) comporte un support d'extrémité (400) fixé à une partie de montage (640) du boîtier de bloc-batterie (602).

4. Bloc-batterie (600) selon la revendication 2 ou 3, dans lequel chaque support d'extrémité (400), la partie de montage (640) et le boîtier de bloc-batterie (602) sont tous reliés thermiquement entre eux et constitués d'un matériau thermoconducteur.

5. Bloc-batterie (600) selon la revendication 2 ou 3, dans lequel chaque support d'extrémité (400) présente une surface de fixation (410) s'étendant dans une direction de largeur (W) de celui-ci, la surface de fixation (410) présentant au moins un trou de fixation (412) formé en son sein, chaque support d'extrémité (400) étant fixé à la pièce de montage (640) à travers l'au moins un trou de fixation (412).

6. Bloc-batterie (600) selon la revendication 5, dans lequel chaque support d'extrémité (400) présente une nervure de renfort (420) s'étendant perpendiculairement à la surface de fixation (410).

7. Bloc-batterie (600) selon la revendication 1, dans lequel chaque plaque latérale (200) comporte au moins une poche d'absorption de chaleur/d'aération (240) disposée dans un espace intérieur délimité par les nervures de liaison (220), dans lequel la poche d'absorption de chaleur/d'aération (240) scelle et stocke en son sein un matériau absorbant imprégné de liquide (242).

8. Bloc-batterie (600) selon la revendication 7, dans lequel le matériau absorbant (242) est une matrice superabsorbante comportant un polymère superabsorbant (SAP) ou une fibre superabsorbante (SAF).

9. Bloc-batterie (600) selon la revendication 8, dans lequel la poche d'absorption de chaleur/d'aération (240) présente une partie d'étanchéité thermofondue (244) le long d'un bord de celle-ci, la partie d'étanchéité thermofondue (244) présentant une partie vulnérable (246) configurée de préférence pour se rompre lorsqu'une pression interne du matériau absorbant (242) dépasse une résistance à l'éclatement de la poche d'absorption de chaleur/d'aération (240).

10. Bloc-batterie (600) selon la revendication 1, dans lequel une extrémité supérieure de chaque plaque latérale (200) présente une bride supérieure (230) pliée et en contact avec une surface supérieure du réseau de cellules (100), la bride supérieure (230) exerçant une force de fixation vers le bas pour appuyer le réseau de cellules (100) contre une plaque de base (610) du boîtier de bloc-batterie (602).

11. Bloc-batterie (600) selon la revendication 10, dans lequel le boîtier de bloc-batterie (602) comprend :
la plaque de base (610) formant une surface inférieure, un cadre latéral (620) formant des parois le long de côtés de la plaque de base (610) et un couvercle supérieur (630) scellant une surface supérieure du boîtier de bloc-batterie (602),
dans lequel un intérieur de la plaque de base (610) définit un trajet d'écoulement de refroidissement (614) en son sein configuré pour recevoir à travers celui-ci un écoulement d'un milieu de refroidissement.

12. Bloc-batterie (600) selon la revendication 11, dans lequel un matériau d'interface thermoconducteur (TIM) est interposé entre la plaque de base (610) et une surface de contact de chaque bloc de batterie (10) qui fait face à la plaque de base (610).

13. Bloc-batterie (600) selon la revendication 1, dans lequel chaque support latéral (210) présente une rainure de fixation (212) insérée dans un boulon soudé (310) faisant saillie à partir de la plaque d'extrémité (300) fixée à celui-ci, dans lequel le boulon soudé (310) et la rainure de fixation (212) sont liés l'un à l'autre par soudage.

14. Bloc-batterie (600) selon la revendication 13, dans lequel la rainure de fixation (212) est une première rainure de fixation, chaque support latéral (210) ayant une deuxième rainure de fixation (212), les première et deuxième rainures de fixation (212) étant respectivement sur des côtés gauche et droit du support latéral (210), par rapport à un centre du support latéral (210) dans la direction de largeur (W) des plaques latérales (200).

15. Bloc-batterie (600) selon la revendication 14, dans lequel chaque plaque latérale (200) est fixée aux premier et deuxième réseaux adjacents des réseaux de cellules (100) agencés le long de la direction de largeur (W) des plaques latérales (200), et le boulon soudé (310) prévu sur la paire de plaques d'extrémité (300) disposées sur les surfaces avant et arrière du deuxième des réseaux de cellules (100) est fixé aux rainures de fixation (212) du support latéral (210) du premier des réseaux de cellules (100).
